# EUROPÄISCHE PATENTANMELDUNG

(11) **EP 4 491 449 A1**
(43) Veröffentlichungstag der Anmeldung: **15.01.2025**
(21) Anmeldenummer: 24187340.5
(22) Anmeldetag: 09.07.2024
(51) Int. Cl.: B60N 2/015

(54) **FREIZEITFAHRZEUG MIT EINEM LEICHTBAUFUSSBODEN UND EINER SITZBEFESTIGUNG IM FUSSBODEN SOWIE HERSTELLUNGSVERFAHREN FÜR DEN FUSSBODEN**

(30) Priorität: 09.07.2023 DE 102023118110
(71) Anmelder: Bürstner GmbH & Co. KG, 77694 Kehl (DE)
(72) Erfinder: Niedick, Tim, 77652 Offenburg (DE)
(74) Vertreter: Müller Schupfner & Partner Patent- und Rechtsanwaltspartnerschaft mbB (Muc)

(57) **Zusammenfassung**

Verfahren zur Herstellung eines Fußbodens (2), insbesondere eines integrierten Fußbodens, für Freizeitfahrzeuge (1), insbesondere für Wohnmobile und/oder Campervans, wobei der Fußboden (2) zumindest eine Leichtbauplatte (7) aufweist. Vorgeschlagen wird, dass zumindest eine Leichtbauplatte (7) mit zumindest einem Profilkörper (8) und zumindest einem Leichtbauschaum (9) ausgebildet wird, dass die Leichtbauplatte (7) mit einer Deckschicht (10) versehen wird, an der im montierten Zustand, in dem der Fußboden (2) in dem Freizeitfahrzeug (1) montiert ist, eine Oberseite (15) des Fußbodens (2) ausgebildet ist, dass in die Deckschicht (10) zumindest eine Längsöffnung (16) eingebracht wird und dass die zumindest eine Längsöffnung (16) der Deckschicht (10) bezüglich des zumindest einen Profilkörpers (8) der Leichtbauplatte (7) so positioniert wird, dass über die Längsöffnung (16) der Deckschicht (10) und eine Längsöffnung (18) des Profilkörpers (8) ein Eingriff von der Oberseite (15) des Fußbodens (2) in einen Profilraum (20) des Profilkörpers (8) ermöglicht ist. Ferner sind ein Fußboden (2) und ein Freizeitfahrzeug (1) angegeben.

## Beschreibung

Die Erfindung betrifft ein Freizeitfahrzeug, insbesondere ein Wohnmobil, mit einem Fußboden, an dem eine Befestigung von Sitzen oder dergleichen mittels einer Schienenanordnung ermöglicht ist. Hierbei betrifft die Erfindung vorzugsweise eine Ausgestaltung, bei der solch ein Fahrzeugsitz von einem Benutzer auf einfache Weise verstellt und gegebenenfalls ein- und ausgebaut werden kann, um eine variable Nutzung des Freizeitfahrzeugs zu ermöglichen. Insbesondere betrifft die Erfindung einen Campervan der auch auf eine Nutzung im Alltag anpassbar ist. Beispielsweise kann hierfür zumindest ein Teil der zum Campen dienenden Einrichtungen, wie ein Bett, ausbaubar sein und durch den Einbau von Sitzen eine Nutzung im Alltag zur Beförderung von Personen ermöglicht werden, so dass der Nutzwert des Campervans erheblich verbessert ist. Außerdem kann dann beispielsweise ein Sitz oder eine Sitzbank eingebaut und verstellt werden.

Aus der DE 11 2017 001 207 T5 ist ein Kleinbus bekannt. Hierbei ist bekannt, dass die Sitze der zweiten Reihe eines Kleinbusses aus dem Motorfahrzeug entfernbar sein können. Ferner ist ein Schienen- und Trägersystem für erste und zweite entfernbare Sitze bekannt, das eine erste untere Schiene, die fest an einem Boden des Motorfahrzeugs befestigt und seitlich entlang diesem positioniert ist, eine erste obere Schiene, die mit der ersten unteren Schiene ineinander gesteckt ist und in dieser seitlich verschiebbar ist und eine zweite obere Schiene aufweist, die mit der ersten unteren Schiene ineinander gesteckt ist und in dieser seitlich verschiebbar ist. Ferner sind eine zweite untere Schiene, die seitlich entlang des Bodens des Motorfahrzeugs parallel zu der ersten unteren Schiene und längs hinter der ersten unteren Schiene positioniert ist, eine dritte obere Schiene, die mit der zweiten unteren Schiene ineinander gesteckt ist und in dieser seitlich verschiebbar ist, eine vierte obere Schiene, die mit der zweiten unteren Schiene ineinander gesteckt ist und in dieser seitlich verschiebbar ist, erste und zweite Querriegel, die seitlich beabstandet sind und senkrecht zu den ersten und dritten oberen Schienen angeordnet sind, wobei die ersten und zweiten Querriegel mit den ersten und dritten oberen Schienen verbunden sind, dritte und vierte Querriegel, die seitlich beabstandet sind, die senkrecht zu den zweiten und vierten oberen Schienen angeordnet sind, wobei die dritten und vierten Querriegel mit den zweiten und vierten oberen Schienen verbunden sind, eine erste Abdeckung, die mit den ersten und zweiten Querriegeln verbunden ist und sich zwischen diesen erstreckt, und eine zweite Abdeckung vorgesehen, die mit den dritten und vierten Querriegeln verbunden ist und sich zwischen diesen erstreckt.

Der aus der DE 11 2017 001 207 T5 bekannte Kleinbus und das bekannte Schienen- und Trägersystem haben den Nachteil, dass der Aufbau aufwändig ist. Das Schienen- und Trägersystem besteht aus einer Vielzahl von Elementen, die im Kleinbus montiert werden müssen. Dadurch ist auch die Montage aufwändig. Ferner ergibt sich eine Erhöhung des Leergewichts, was sich ungünstig auf die mögliche Zuladung auswirkt.

Es sind verschiedene Varianten von sogenannten Rail-In-Schienen für die Führung und Befestigung von Sitzbänken und Einzelsitzen in Urban-Vehicles denkbar Die heutigen Entwicklungen gemäß einem internen und nicht notwendigerweise bereits veröffentlichen Stand der Technik erfordern jedoch eine nachträgliche Montage der Schienen und sind wenig integrativ gestaltet. Die Montage der Schienen ist teils sehr aufwändig, da hier eine extreme Genauigkeit bezüglich Position und Parallelität gegeben sein sollte. Dementsprechend sind genaueste Montagevorrichtungen erforderlich. Zudem sind frei auf dem Markt befindliche Schienensystem sehr kostspielig.

Eine aktuelle Eigenentwicklung entsprechend einer zum Anmeldetag dieser Anmeldung noch nicht veröffentlichen Anmeldung erfordert bei einer möglichen Ausgestaltung ein nachträgliches Einkleben der Sitzschienen. Je nach Ausführung kann dies eine spezielle Montagevorrichtung und eine Verklebung erfordern.

Aufgabe der Erfindung ist es, einen Verfahren zur Herstellung eines Fußbodens für ein Freizeitfahrzeug, insbesondere für ein Wohnmobil und/oder einen Campervan, einen Fußboden und ein Freizeitfahrzeug mit einem Fußboden anzugeben, die verbessert ausgestaltet sind.

Die Aufgabe wird durch einen Verfahren mit den Merkmalen des unabhängigen Patentanspruchs 1, einen Fußboden mit den Merkmalen des Anspruchs 11 oder 12 und durch ein Freizeitfahrzeug mit den Merkmalen des Patentanspruchs 14 gelöst. Vorteilhafte Weiterbildung der Erfindung sind in den Unteransprüchen angegeben.

Die Aufgabe wird durch ein Verfahren zur Herstellung eines Fußbodens, insbesondere eines integrierten Fußbodens, für Freizeitfahrzeuge, insbesondere für Wohnmobile und/oder Campervans, gelöst, wobei der Fußboden zumindest eine Leichtbauplatte aufweist, wobei zumindest eine Leichtbauplatte mit zumindest einem Profilkörper und zumindest einem Leichtbauschaum ausgebildet wird, wobei die Leichtbauplatte mit einer Deckschicht versehen wird, an der im montierten Zustand, in dem der Fußboden in dem Freizeitfahrzeug montiert ist, eine Oberseite des Fußbodens ausgebildet ist, wobei in die Deckschicht zumindest eine Längsöffnung eingebracht wird und wobei die zumindest eine Längsöffnung der Deckschicht bezüglich des zumindest einen Profilkörpers der Leichtbauplatte so positioniert wird, dass über die Längsöffnung der Deckschicht und eine Längsöffnung des Profilkörpers ein Eingriff von der Oberseite des Fußbodens in einen Profilraum des Profilkörpers ermöglicht ist.

Ferner wird die Aufgabe durch einen Fußboden, insbesondere einen integrierten Fußboden, für Freizeitfahrzeuge, insbesondere für Wohnmobile und/oder Campervans, gelöst, wobei der Fußboden zumindest eine Leichtbauplatte aufweist und wobei der Fußboden mittels solch eines Verfahrens hergestellt ist.

Außerdem wird die Aufgabe durch einen Fußboden, insbesondere einen integrierten Fußboden, für Freizeitfahrzeuge, insbesondere für Wohnmobile und/oder Campervans, gelöst, wobei der Fußboden zumindest eine Leichtbauplatte aufweist, wobei zumindest eine Leichtbauplatte mit zumindest einem Profilkörper und zumindest einem Leichtbauschaum vorgesehen ist, wobei die Leichtbauplatte mit einer Deckschicht versehen ist, an der im montierten Zustand, in dem der Fußboden in dem Freizeitfahrzeug montiert ist, eine Oberseite des Fußbodens ausgebildet ist, wobei in die Deckschicht zumindest eine Längsöffnung eingebracht ist und wobei die zumindest eine Längsöffnung der Deckschicht bezüglich des zumindest einen Profilkörpers der Leichtbauplatte so positioniert ist, dass über die Längsöffnung der Deckschicht und eine Längsöffnung des Profilkörpers ein Eingriff von der Oberseite des Fußbodens in einen Profilraum des Profilkörpers ermöglicht ist.

Ferner wird die Aufgabe durch ein Freizeitfahrzeug, insbesondere ein Wohnmobil und/oder einen Campervan, mit zumindest einem solchen Fußboden gelöst.

Vorteilhaft ist es, dass die Längsöffnung des Profilkörpers zusammen mit der Längsöffnung der Deckschicht ausgestaltet wird. Dadurch kann in einem Arbeitsgang eine zuverlässige Positionierung der Längsführungen mit hoher Genauigkeit erfolgen. Ferner wird eine einfache Herstellung und Montage ermöglicht.

Vorteilhaft ist es, dass die Längsöffnung des Profilkörpers in dem Profilkörper ausgestaltet wird, bevor der Profilkörper mit der Deckschicht versehen wird. Dadurch kann gegebenenfalls eine Vereinfachung des Arbeitsschritts zur Realisierung der Längsöffnung in der Deckschicht erfolgen, da gegebenenfalls der Werkstoff der Deckschicht alleine einfacher zu bearbeiten ist.

Vorteilhaft ist es, dass die Längsöffnung des Profilkörpers in dem Profilkörper ausgestaltet wird, bevor die Leichtbauplatte mit dem zumindest einen Profilkörper und dem zumindest einem Leichtbauschaum ausgebildet wird. Hierdurch kann beispielsweise eine Vorfertigung des Profilkörpers erfolgen.

Vorteilhaft ist es, dass die Längsöffnung des Profilkörpers in dem Profilkörper ausgestaltet wird, nachdem die Leichtbauplatte mit dem zumindest einen Profilkörper und dem zumindest einem Leichtbauschaum ausgebildet wird. Hierdurch ist eine präzise Positionierung der Längsöffnung des Profilkörpers möglich.

Vorteilhaft ist es, dass sich der Profilraum des Profilkörpers zumindest entlang der Längsöffnung des Profilkörpers und/oder der Längsöffnung der Deckschicht zumindest im Wesentlichen so ununterbrochen erstreckt, dass ein entlang des Profilraums verstellbarer, insbesondere kontinuierlich verstellbarer, Eingriff einer Befestigungseinrichtung in den Profilraum ermöglicht wird. Hierdurch kann insbesondere eine variable Sitzbefestigung ermöglicht werden, die eine Verstellung über einen großen Bereich ermöglicht.

Vorteilhaft ist es, dass zumindest ein Abdeckprofil auf der Deckschicht montiert wird, das eine Schnittkante der Deckschicht an der Längsöffnung der Deckschicht überdeckt. Dadurch kann eine zuverlässige Abdeckung der Schnittkanten erfolgen, die einfach zu montieren ist.

Vorteilhaft ist es, dass das Abdeckprofil zumindest einen Profilwinkel aufweist und dass das Abdeckprofil so montiert wird, dass sich das Abdeckprofil mit einer Seite des Profilwinkels zumindest teilweise in die Längsöffnung der Deckschicht erstreckt. Hierdurch wird über die Lebensdauer eine zuverlässige Abdeckung gewährleistet.

Vorteilhaft ist es, dass das Abdeckprofil so montiert wird, dass sich das Abdeckprofil durch die Längsöffnung der Deckschicht und zumindest teilweise in die Längsöffnung des Profilkörpers erstreckt. Hierdurch wird eine vorteilhafte Geometrie für den Eingriff über die Lebensdauer gewährleistet.

Vorteilhaft ist es, dass ein weiteres Abdeckprofil auf der Deckschicht montiert wird, das eine weitere Schnittkante der Deckschicht an der Längsöffnung der Deckschicht überdeckt, und dass durch das Abdeckprofil und das weitere Abdeckprofil eine beidseitige Längsführung gebildet wird. Somit kann zusätzlich eine vorteilhafte Führung erzielt werden.

Vorteilhaft ist es, dass das Abdeckprofil beziehungsweise das weitere Abdeckprofil durch Clipsen montiert wird. Dadurch kann eine besonders einfache Montage erfolgen.

Vorteilhaft ist es, dass zumindest eine Einrichtung, insbesondere Sitzeinrichtung, vorgesehen ist und dass die zumindest eine Einrichtung durch Eingreifen zumindest einer vorzugsweise verstellbaren Befestigungseinrichtung in zumindest einen Profilraum zumindest eines Profilkörpers an dem Fußboden befestigbar ist. Auf diese Weise kann insbesondere eine variable Sitzbefestigung realisiert werden.

Je nach Ausgestaltung können folgende Nachteile vermieden und die genannten Merkmale und Vorteile realisiert werden. Statt eines hoher zeitlichen Aufwands kann eine rasche Montage erfolgen. Teure Montagevorrichtungen können eingespart werden. Abhängigkeiten von einem Monteur in der Montage können reduziert werden, so dass insbesondere statt mindestens zwei notwendigen Personen für eine Montage nur noch eine Person erforderlich ist. Eine Mehrteiligkeit kann vermieden werden. Insbesondere kann die Anzahl der im Fahrzeug zu montierenden Bauteile reduziert werden. Teure Materialien inklusive Montagematerial können eingespart werden.

Das neue Profil wird vorzugsweise in den Sandwichboden zunächst als geschlossenes Profil eingepresst. In der nachträglichen CNC-Bearbeitung wird der Boden inklusive Profil vorzugsweise aufgefräst, wobei in dem Profil die Sitzbank und/oder die Einzelsitze mit vorzugsweise einem Zapfen oder dergleichen befestigt werden können. Dieses Profil kann so angepasst werden, dass es mit einer speziellen Sitzbank beziehungsweise mit einem speziellen Sitz kompatibel ist. Die Schnittkanten werden vorzugsweise nachträglich mit einem Profil, insbesondere einem L-Profil, abgedeckt.

Eine Sitzschiene (Befestigungsschiene) kann somit integrativ und kaum sichtbar gestaltet werden. Nachträgliche Montageprozesse des Profils, insbesondere des L-Profils, sind bei einer möglichen Ausgestaltung nur aus optischen Gründen vorgesehen. Durch eine Montage mittels Clipsen kann eine schnell durchzuführende Montage ermöglicht werden. Es wird keine Montagevorrichtung benötigt. Sitzschienen können integrativ in einen Sandwichboden eingepresst werden. Eine Parallelität der Führungen kann durch CNC-Fräsung oder dergleichen gegeben sein. Es ist vorzugsweise keine Montagevorrichtungen erforderlich. Eine Verringerung der Prozesszeit in der Vor- und Endmontage ist möglich. Ein verbessertes Design beziehungsweise ein verbesserter optischer Eindruck ist realisierbar. Je nach Ausgestaltung kann eine hohe Kosteneinsparung in Material und Prozesszeit erfolgen.

Weitere Vorteile und Einzelheiten der Erfindung werden anhand des in den schematischen Figuren dargestellten Ausführungsbeispiels näher erläutert. Hierbei zeigen:
- Fig. 1: ein Freizeitfahrzeug mit einem Fußboden entsprechend einem Ausführungsbeispiel in einer teilweise geöffneten, schematischen Darstellung, wobei eine Ansicht von der Seite dargestellt ist;
- Fig. 2: eine auszugsweise, schematische Schnittdarstellung des Fußbodens des in Fig. 1 gezeigten Freizeitfahrzeugs entlang der mit II bezeichneten Schnittlinie, wobei ein Profilkörper in einem Sandwichaufbau gezeigt ist; und
- Fig. 3: den in Fig. 2 gezeigten Fußboden, wobei ein montierter Zustand veranschaulicht ist und wobei zur Verdeutlichung eine Befestigungseinrichtung in einer schematischen, auszugsweisen Darstellung gezeigt ist, die beispielsweise zur Befestigung eines Sitzes im Fahrzeug in den Profilkörper eingreift.

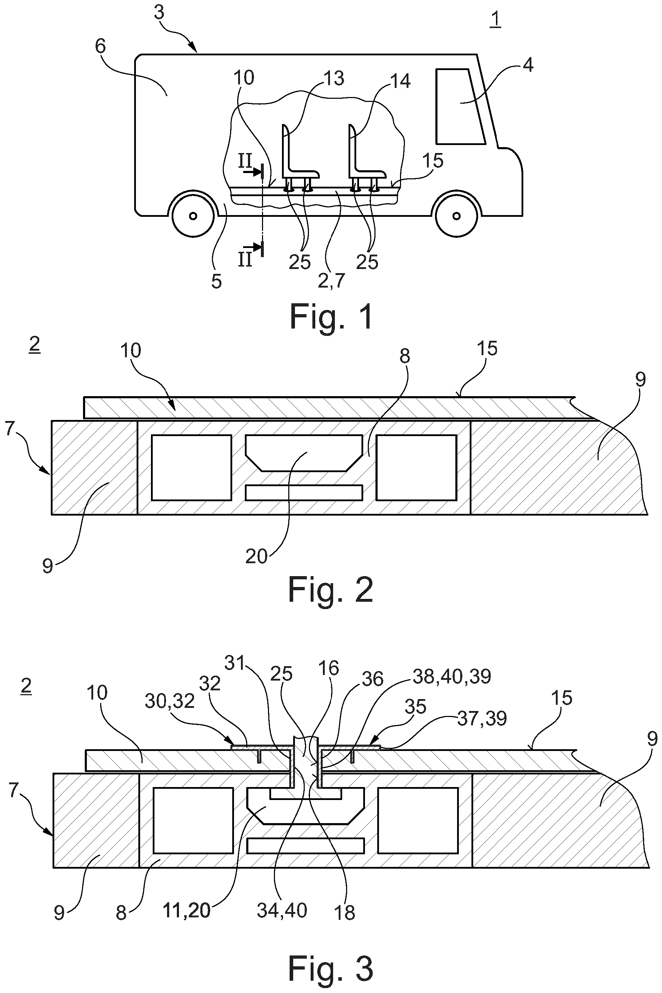

Fig. 1 zeigt ein Freizeitfahrzeug 1 mit einem Fußboden 2 entsprechend einem Ausführungsbeispiel in einer teilweise geöffneten, schematischen Darstellung, wobei eine Ansicht von der Seite dargestellt ist. Das Freizeitfahrzeug 1 kann insbesondere als Wohnmobil ausgestaltet sein. Besonders bevorzugt ist das Freizeitfahrzeug 1 als Campervan ausgebildet. Die Fußboden 2 eignet sich insbesondere für solche Freizeitfahrzeuge 1.

Das Freizeitfahrzeug 1 kann auf einem Basisfahrzeug 3 basieren. Als Basisfahrzeug 3 dient in diesem Ausführungsbeispiel ein Kleintransporter. Dadurch kann das Freizeitfahrzeug 1 mit reduziertem Herstellungsaufwand hergestellt werden. Um die Herstellungskosten zu optimieren, können hierbei ein Fahrerhaus 4, ein Chassis (Fahrwerk) 5 und eine ein über dem Chassis 5 aufgebaute Hülle 6 des Basisfahrzeugs 3 zumindest in modifizierter Form übernommen werden. Als Modifikationen können beispielsweise ein Dachausschnitt und eine modifizierte Seitentür sowie Ausschnitte in den Hecktüren oder einer Heckklappe und/oder in der Hülle, die für Fenster dienen, realisiert werden.

Der Fußboden 2 ist in diesem Ausführungsbeispiel als integrierter Fußboden 2 ausgebildet, der in das Freizeitfahrzeuge 1 fest integriert ist. Hierbei ist die Ausgestaltung insbesondere so realisiert, dass keine einfache Demontage von Bauteilen möglich ist. Außerdem kann der Fußboden 2 als Baugruppe beziehungsweise Zwischenprodukt vorgefertigt und dann im Wesentlichen einstückig in das Basisfahrzeug 3 eingebaut werden.

Im folgenden wir der Fußboden 2 auch unter Bezugnahme auf Fig. 2 weiter besch rieben.

Fig. 2 zeigt eine auszugsweise, schematische Schnittdarstellung des Fußbodens 2 des in Fig. 1 gezeigten Freizeitfahrzeugs 1 entlang der mit II bezeichneten Schnittlinie. Der Fußboden 2 weist zumindest eine Leichtbauplatte 7 auf. Hierbei kann der Fußboden aus mehreren Leichtbauplatten 7 zusammengesetzt sein. Die Leichtbauplatte 7 umfasst zumindest einem Profilkörper 8 und einen Leichtbauschaum 9. Der Leichtbauschaum 9 kann insbesondere ein XPS-Schaum sein. Die Leichtbauplatte kann einen Sandwichaufbau aufweisen, in den der Profilkörper 8 eingesetzt beziehungsweise eingebunden ist. In diesem Ausführungsbeispiel ist der Profilkörper 8 von dem Leichtbauschaum 9 umgeben. Ferner ist die Leichtbauplatte 7 mit einer Deckschicht 10 versehen, die über dem Profilkörper 8 angeordnet ist.

Vorzugsweise ist zumindest ein weiterer Profilkörper vorgesehen, der entsprechend dem Profilkörper 8 ausgestaltet und in entsprechender Weise vorzugsweise parallel zu dem Profilkörper 8 in die Leichtbauplatte 7 integriert ist. Dadurch kann eine gewisse Anzahl von Befestigungsschienen 11 (Fig. 3) für eine Schienenanordnung realisiert werden. Denkbar ist es auch, dass an einem Profilkörper 8 zwei oder mehr Befestigungsschienen 11 realisiert werden.

Im folgenden wird die Ausgestaltung des Fußbodens 2 auch unter Bezugnahme auf Fig. 3 weiter beschrieben.

Fig. 3 zeigt den in Fig. 2 gezeigten Fußboden 2, wobei ein montierter Zustand veranschaulicht, bei dem der Fußboden 2 im Freizeitfahrzeug 1 montiert ist. Hierbei können Sitzeinrichtungen 13, 14 im Fahrzeug (Freizeitfahrzeug) 1 an den Befestigungsschienen 11 des Fußbodens 2 befestigt sein, wie es in Fig. 1 gezeigt ist. Es können auch andere Einrichtung montiert werden. Beispielsweise kann eine Einrichtung als Tisch ausgestaltet sein, die anstelle einer Sitzeinrichtung montiert werden kann.

An der Deckschicht 10 ist eine Oberseite 15 des Fußbodens 2 ausgebildet. Im montierten Zustand ist in die Deckschicht 10 zumindest eine Längsöffnung 16 eingebracht. Hierbei wird für jede Befestigungsschiene 11 eine solche Längsöffnung 16 in die Deckschicht 10 eingebracht.

Gegenüber einer herkömmlichen Ausgestaltung hat dies den Vorteil, dass eine prozesssichere Herstellung mit gleichbleibender Qualität möglich ist. Es wäre auch denkbar, dass eine bereits zugeschnittene Deckschicht aufgeklebt wird. Dann müsste aber eine Schnittkante bei der Montage genau positioniert werden. Insbesondere wenn mehrere Schnittkanten parallel zueinander positioniert werden müssten, dann stellt dies einen hohen Aufwand bei der Montage dar. Ferner werden dann mehrere Personen benötigt. Außerdem ist ein solches Verkleben in der Regel ungenau und aufwändig sowie in der Regel nicht völlig sauber ausführbar. Bei einem Aufkleben wäre außerdem ein Verpressen erforderlich, was ebenfalls aufwändig ist. Die realisierte Befestigungsschiene könnte auf diese Weise daher nur mit einer begrenzten Qualität realisiert werden. Im Unterschied dazu kann die Deckschicht 10 beispielsweise durch CNC-Fräsen sehr genau gefräst werden, um die Längsöffnungen 16 genau zu positionieren und auszurichten. Dadurch können insbesondere parallel zueinander orientierte Längsöffnungen 16 realisiert werden.

Die Längsöffnung 16 der Deckschicht 10 ist bezüglich des Profilkörpers 8 der Leichtbauplatte 7 so positioniert, dass die Längsöffnung 16 der Deckschicht 10 und eine Längsöffnung 18 des Profilkörpers 8 übereinander liegen und ein Eingriff von der Oberseite 15 des Fußbodens 2 in einen Profilraum 20 des Profilkörpers 8 über die Längsöffnungen 16, 18 möglich ist. Die Einrichtung 13, 14 können dann durch Eingreifen von Befestigungseinrichtungen 25 in den Profilraum 20 des Profilkörpers 8 an dem Fußboden 2 befestigbar. Je nach Ausgestaltung können hierbei mehrere Profilräume 20 entsprechend der Anzahl der Befestigungsschienen 11 vorgesehen sein.

Bei einer möglichen Ausführung des Herstellungsverfahrens können die Längsöffnung 18 des Profilkörpers 8 und die Längsöffnung 16 der Deckschicht 10 zusammen ausgestaltetet werden. Dies kann über eine CNC-Bearbeitung erfolgen, bei der die Deckschicht 10 zusammen mit dem Profilkörper 8 aufgefräst wird.

Bei einer abgewandelten Ausgestaltung kann zunächst die Längsöffnung 18 des Profilkörpers 8 in dem Profilkörper 8 ausgestaltet werden. Erst anschließend oder später kann die Deckschicht 10 aufgebracht werden. Bei der Herstellung des Sandwichaufbaus kann bei einer möglichen Ausgestaltung des Verfahrens ein gefräster Profilkörper 8 genutzt werden. Dieser gefräste Profilkörper 8 kann mit dem Leichtbauschaum an zumindest zwei Seiten umgeben werden. Ferner ist darüber die Deckschicht 10 vorgesehen. Dann kann die Deckschicht 10 dort aufgefräst werden, wo bei dem Profilkörper 8 die Längsöffnung 18 ist.

Bei einer weiteren Abwandlung kann die Längsöffnung 18 des Profilkörpers 8 in dem Profilkörper 8 ausgestaltet wird, nachdem die Leichtbauplatte 7 mit dem zumindest einen Profilkörper 8 und dem zumindest einem Leichtbauschaum 9 ausgebildet wird. Dies ermöglicht das nachträgliche Aufbringen der Deckschicht 10. Hierdurch können beispielsweise Designvarianten realisiert werden. Je nach Ausgestaltung kann die Deckschicht 10 ein Teil der Leichtbauplatte 7 sein oder nicht.

Der Profilraum 20 des Profilkörpers 8 erstreckt sich entlang der Längsöffnung 18 des Profilkörpers 8 zumindest im Wesentlichen ununterbrochen, so dass eine Verstellung der Sitzeinrichtungen 13, 14 möglich ist. Dadurch ist eine variable Positionierung der Sitzeinrichtungen 13, 14 im Fahrzeug 1 möglich. Gegebenenfalls kann die Längsöffnung 16 der Deckschicht 10 kürzer als die Längsöffnung 18 des Profilkörpers 8 sein, so dass die Verschiebbarkeit dann entsprechend verkürzt ist. Insbesondere kann die Längsöffnung der Deckschicht abschnittsweise verschlossen sein, um eine Begrenzung der Verschiebbarkeit zu erzielen.

Ein Abdeckprofil 30 ist so auf der Deckschicht 10 montiert, das eine Schnittkante 31 der Deckschicht 10 an der Längsöffnung 16 der Deckschicht 10 überdeckt ist. Das Abdeckprofil 30 weist in diesem Ausführungsbeispiel einen Profilwinkel 32 mit Seiten 33, 34 auf. Die Seite 33 liegt auf der Oberseite 15 auf. Die Seite 34 erstreckt sich vorzugsweise senkrecht zu der Oberseite 15. Das Abdeckprofil 30 ist hierbei so montiert, dass sich das Abdeckprofil 30 mit der Seite 34 des Profilwinkels 32 nach unten in die Längsöffnung 16 der Deckschicht 10 erstreckt. Vorzugsweise erstreckt sich das Abdeckprofil 30 auch in die gesamte Längsöffnung 18 des Profilkörpers 8.

In entsprechender Weise ist ein weiteres Abdeckprofil 35 auf der Deckschicht 10 montiert, das eine weitere Schnittkante 36 der Deckschicht 10 an der Längsöffnung 16 der Deckschicht 10 überdeckt. Das weitere Abdeckprofil 35 weist Seiten 37, 38 eines Profilwinkels 39 auf. Durch das Abdeckprofil 30 und das weitere Abdeckprofil 35 ist eine beidseitige Längsführung 40 gebildet. Bevorzugt sind das Abdeckprofil 30 und das weitere Abdeckprofil 35 lediglich durch Clipsen montiert. Dadurch ist die Montage weiter vereinfacht.

Somit kann insbesondere ein integrierter Fußboden 2 für Freizeitfahrzeuge 1 realisiert werden. Hierbei kann eine Kosteneinsparung erzielt werden. Ferner wird eine einfachere Handhabung bei der Montage ermöglicht, da eine einstückige Ausgestaltung des Fußbodens 2 durch eine Vorfertigung möglich ist. Ferner kann bei einer möglichen Bandmontage des Freizeitfahrzeugs 1 Montagezeit eingespart werden.

Die Erfindung ist nicht auf die beschriebenen Ausführungsformen beschränkt.

## Patentansprüche

1. Verfahren zur Herstellung eines Fußbodens (2), insbesondere eines integrierten Fußbodens, für Freizeitfahrzeuge (1), insbesondere für Wohnmobile und/oder Campervans, wobei der Fußboden (2) zumindest eine Leichtbauplatte (7) aufweist, **dadurch gekennzeichnet,**
**dass** zumindest eine Leichtbauplatte (7) mit zumindest einem Profilkörper (8) und zumindest einem Leichtbauschaum (9) ausgebildet wird, dass die Leichtbauplatte (7) mit einer Deckschicht (10) versehen wird, an der im montierten Zustand, in dem der Fußboden (2) in dem Freizeitfahrzeug (1) montiert ist, eine Oberseite (15) des Fußbodens (2) ausgebildet ist, dass in die Deckschicht (10) zumindest eine Längsöffnung (16) eingebracht wird und dass die zumindest eine Längsöffnung (16) der Deckschicht (10) bezüglich des zumindest einen Profilkörpers (8) der Leichtbauplatte (7) so positioniert wird, dass über die Längsöffnung (16) der Deckschicht (10) und eine Längsöffnung (18) des Profilkörpers (8) ein Eingriff von der Oberseite (15) des Fußbodens (2) in einen Profilraum (20) des Profilkörpers (8) ermöglicht ist.

2. Verfahren nach Anspruch 1,
**dadurch gekennzeichnet,**
**dass** die Längsöffnung (18) des Profilkörpers (8) zusammen mit der Längsöffnung (16) der Deckschicht (10) ausgestaltet wird.

3. Verfahren nach Anspruch 1,
**dadurch gekennzeichnet,**
**dass** die Längsöffnung (18) des Profilkörpers (8) in dem Profilkörper (8) ausgestaltet wird, bevor der Profilkörper (8) mit der Deckschicht (10) versehen wird.

4. Verfahren nach Anspruch 3,
**dadurch gekennzeichnet,**
a) **dass** die Längsöffnung (18) des Profilkörpers (8) in dem Profilkörper (8) ausgestaltet wird, bevor die Leichtbauplatte (7) mit dem zumindest einen Profilkörper (8) und dem zumindest einem Leichtbauschaum (9) ausgebildet wird, oder
b) **dass** die Längsöffnung (18) des Profilkörpers (8) in dem Profilkörper (8) ausgestaltet wird, nachdem die Leichtbauplatte (7) mit dem zumindest einen Profilkörper (8) und dem zumindest einem Leichtbauschaum (9) ausgebildet wird.

5. Verfahren nach einem der Ansprüche 1 bis 4,
**dadurch gekennzeichnet,**
**dass** sich der Profilraum (20) des Profilkörpers (8) zumindest entlang der Längsöffnung (18) des Profilkörpers (8) und/oder der Längsöffnung (16) der Deckschicht (10) zumindest im Wesentlichen so ununterbrochen erstreckt, dass ein entlang des Profilraums (20) verstellbarer, insbesondere kontinuierlich verstellbarer, Eingriff einer Befestigungseinrichtung (25) in den Profilraum (20) ermöglicht wird.

6. Verfahren nach einem der Ansprüche 1 bis 5,
**dadurch gekennzeichnet,**
**dass** zumindest ein Abdeckprofil (30) auf der Deckschicht (10) montiert wird, das eine Schnittkante (31) der Deckschicht (10) an der Längsöffnung (16) der Deckschicht (10) überdeckt.

7. Verfahren nach Anspruch 6,
**dadurch gekennzeichnet,**
**dass** das Abdeckprofil (30) zumindest einen Profilwinkel (32) aufweist und dass das Abdeckprofil (30) so montiert wird, dass sich das Abdeckprofil (30) mit einer Seite (34) des Profilwinkels (32) zumindest teilweise in die Längsöffnung (16) der Deckschicht (10) erstreckt.

8. Verfahren nach Anspruch 7,
**dadurch gekennzeichnet,**
**dass** das Abdeckprofil (30) so montiert wird, dass sich das Abdeckprofil (30) durch die Längsöffnung (16) der Deckschicht (10) und zumindest teilweise in die Längsöffnung (18) des Profilkörpers (8) erstreckt.

9. Verfahren nach einem der Ansprüche 6 bis 8,
**dadurch gekennzeichnet,**
**dass** ein weiteres Abdeckprofil (35) auf der Deckschicht (10) montiert wird, das eine weitere Schnittkante (36) der Deckschicht (10) an der Längsöffnung (16) der Deckschicht (10) überdeckt, und dass durch das Abdeckprofil (30) und das weitere Abdeckprofil (35) eine beidseitige Längsführung (40) gebildet wird.

10. Verfahren nach einem der Ansprüche 6 bis 9,
**dadurch gekennzeichnet,**
**dass** das Abdeckprofil (30) beziehungsweise das weitere Abdeckprofil (35) durch Clipsen montiert wird.

11. Fußboden (2), insbesondere integrierter Fußboden (2), für Freizeitfahrzeuge (1), insbesondere für Wohnmobile und/oder Campervans, wobei der Fußboden (2) zumindest eine Leichtbauplatte (7) aufweist und wobei der Fußboden (2) mittels eines Verfahrens nach einem der Ansprüche 1 bis 10 hergestellt ist.

12. Fußboden (2), insbesondere integrierter Fußboden, für Freizeitfahrzeuge, insbesondere für Wohnmobile und/oder Campervans, wobei der Fußboden (2) zumindest eine Leichtbauplatte (7) aufweist,
**dadurch gekennzeichnet,**
**dass** zumindest eine Leichtbauplatte (7) mit zumindest einem Profilkörper (8) und zumindest einem Leichtbauschaum (9) vorgesehen ist, dass die Leichtbauplatte (7) mit einer Deckschicht (10) versehen ist, an der im montierten Zustand, in dem der Fußboden (2) in dem Freizeitfahrzeug (1) montiert ist, eine Oberseite (15) des Fußbodens (2) ausgebildet ist, dass in die Deckschicht (10) zumindest eine Längsöffnung (16) eingebracht ist und dass die zumindest eine Längsöffnung (16) der Deckschicht (10) bezüglich des zumindest einen Profilkörpers (8) der Leichtbauplatte (7) so positioniert ist, dass über die Längsöffnung (16) der Deckschicht (10) und eine Längsöffnung (18) des Profilkörpers (8) ein Eingriff von der Oberseite (15) des Fußbodens (2) in einen Profilraum (20) des Profilkörpers (8) ermöglicht ist.

13. Fußboden nach Anspruch 11,
**dadurch gekennzeichnet,**
**dass** der Fußboden (2) mittels eines Verfahrens nach einem der Ansprüche 1 bis 10 hergestellt ist.

14. Freizeitfahrzeug (1), insbesondere Wohnmobil und/oder Campervan, mit zumindest einem Fußboden (2) nach einem der Ansprüche 10 bis 13.

15. Freizeitfahrzeug nach Anspruch 14,
**dadurch gekennzeichnet,**
**dass** zumindest eine Einrichtung (13, 14), insbesondere Sitzeinrichtung (13, 14), vorgesehen ist und dass die zumindest eine Einrichtung (13, 14) durch Eingreifen zumindest einer vorzugsweise verstellbaren Befestigungseinrichtung (25) in zumindest einen Profilraum (20) zumindest eines Profilkörpers (8) an dem Fußboden (2) befestigbar ist.
